# EUROPEAN PATENT APPLICATION

(11) **EP 4 160 890 A1**
(43) Date of publication of application: **05.04.2023**
(21) Application number: 22198194.7
(22) Date of filing: 27.09.2022
(51) Int. Cl.: H02M 1/00, H02M 1/42, H02M 7/487, H02M 5/458

(54) **DC OUTPUT VOLTAGE REGULATION IN CONVERTER FOR AIR CONDITIONING SYSTEMS**

(30) Priority: 01.10.2021 US 202163251235 P
(71) Applicant: Carrier Corporation, Palm Beach Gardens, FL 33418 (US)
(72) Inventor: BORISOV, Konstantin, Bloomfield, CT 06002 (US); AGIRMAN, Ismail, Bloomfield, CT 06002 (US)
(74) Representative: Dehns

(57) **Abstract**

A converter (200) for an air conditioning system including a rectifier section (320) configured to receive an AC input voltage; a voltage regulator section (330) coupled to the rectifier section (320), the voltage regulator section configured to control a DC output voltage across a positive DC bus (321) and a negative DC bus (322); and a controller (340) in communication with the rectifier section (320) and the voltage regulator section (330), the controller (340) configured to control the converter (200) such that the DC output voltage is greater than AC input voltage by an offset.

## Description

Exemplary embodiments of this disclosure pertain to the art of alternating current (AC) to direct current (DC) converters, and more specifically to DC output voltage regulation in a converter for air conditioning systems.

Air conditioning systems often employ an AC-DC converter to convert multiphase, AC input voltage (main or grid power) to a DC output voltage. Existing converters often operate in a closed loop fashion, where the DC output voltage command is preset in the control architecture and actual DC output voltage is regulated by the closed control loop to match the reference command. In other words, the DC output voltage is fixed by the DC output voltage command. This can result in unnecessarily high DC output voltage, which is detrimental to the life span of sensitive components in the converter.

According to an first aspect, the invention provides a converter for an air conditioning system including a rectifier section configured to receive an AC input voltage; a voltage regulator section coupled to the rectifier section, the voltage regulator section configured to control a DC output voltage across a positive DC bus and a negative DC bus; and a controller in communication with the rectifier section and the voltage regulator section, the controller configured to control the converter such that the DC output voltage is greater than AC input voltage by an offset.

Optionally, the offset is a fixed amount.

Optionally, the offset is a variable amount.

Optionally, the offset is a percentage of the AC input voltage.

Optionally, the offset is a variable amount in response to load or speed of a compressor of the air conditioning system.

Optionally, the converter is a Vienna rectifier.

A second aspect of the invention provides an air conditioning system including a compressor, condenser and evaporator; an inverter providing a multiphase, AC output voltage to the compressor; a converter configured to generate a DC output voltage across a positive DC bus and a negative DC bus, the DC output voltage supplied to the inverter; the converter including: a rectifier section configured to receive an AC input voltage; a voltage regulator section coupled to the rectifier section, the voltage regulator section configured to control the DC output voltage across the positive DC bus and the negative DC bus; and a controller in communication with the rectifier section and the voltage regulator section, the controller configured to control the converter such that the DC output voltage is greater than AC input voltage by an offset.

A third aspect of the present invention provides a method of controlling a converter in an air conditioning system, the method including monitoring an AC input voltage; monitoring a DC output voltage between a positive DC bus and a negative DC bus; controlling the converter such that the DC output voltage is greater than AC input voltage by an offset.

Optionally, the offset is a fixed amount.

Optionally, the offset is a variable amount.

Optionally, the offset is a percentage of the AC input voltage.

Optionally, the offset is a variable amount in response to load or speed of a compressor of the air conditioning system.

Optionally, the converter is a Vienna rectifier.

The following descriptions should not be considered limiting in any way. With reference to the accompanying drawings, like elements are numbered alike. Certain exemplary embodiments will now be described in greater detail by way of example only and with reference to the accompanying drawings in which:
FIG. 1 is a block diagram of an air conditioning system;
FIG. 2 is a schematic diagram of a converter;
FIG. 3 is a flowchart of a process for controlling a converter; and
FIG. 4 depicts an AC input voltage and DC output.

A detailed description of one or more embodiments of the disclosed apparatus and method are presented herein by way of exemplification and not limitation with reference to the Figures.

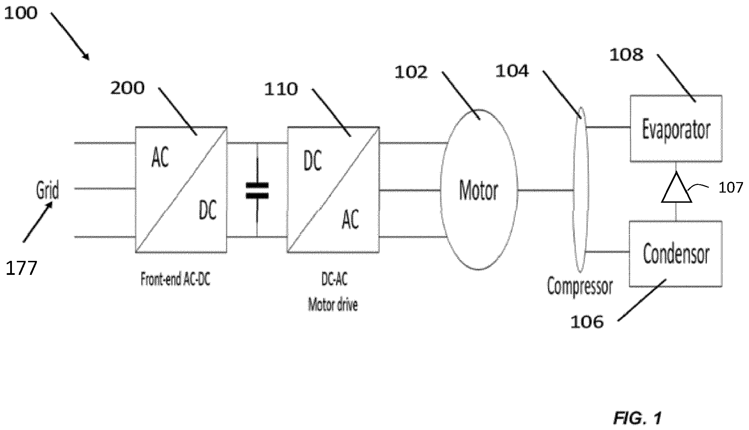

FIG. 1 is a block diagram of air conditioning system 100 in an example embodiment. The air conditioning system 100 may be configured to condition air in a building, such as a chiller, roof top unit, heat pump, etc. The air conditioning system 100 may be configured to condition air for refrigerated environments, such as a refrigerated container, a refrigerated trailer, refrigerator/freezer, etc.

The air conditioning system 100 includes a variable speed motor 102 that is coupled to a compressor 104. The compressor 104 includes an impeller/rotor that rotates and compresses liquid refrigerant to a superheated refrigerant vapor for delivery to a condenser 106. In the condenser 106, the refrigerant vapor is liquefied at high pressure and rejects heat (e.g., to the outside air via a condenser fan in an air-cooled application). The liquid refrigerant exiting condenser 106 is delivered to an evaporator 108 through an expansion valve 107. The refrigerant passes through the expansion valve 107 where a pressure drop causes the high-pressure liquid refrigerant to achieve a lower pressure combination of liquid and vapor. As fluid passes the evaporator 108, the low-pressure liquid refrigerant evaporates, absorbing heat from the fluid, thereby cooling the fluid and evaporating the refrigerant. The low-pressure refrigerant is again delivered to compressor 104 where it is compressed to a high-pressure, high temperature gas, and delivered to condenser 106 to start the refrigeration cycle again. It is to be appreciated that while a specific air conditioning system is shown in FIG. 1, the present teachings are applicable to any air conditioning system.

As shown in FIG. 1, the compressor 104 driven by a variable speed motor 102 from power supplied from a multiphase, AC input voltage 177 (grid or mains) through an AC-DC converter 200 and a DC-AC inverter 110. The inverter 110 includes solid-state electronics to produce multiphase, AC output voltage. In an embodiment, inverter 110 converts the DC output voltage from the converter 200 into a multiphase, AC output voltage, at a desired frequency and/or magnitude in order to drive the multiphase motor 102. Such inverters 110 are known in the art.

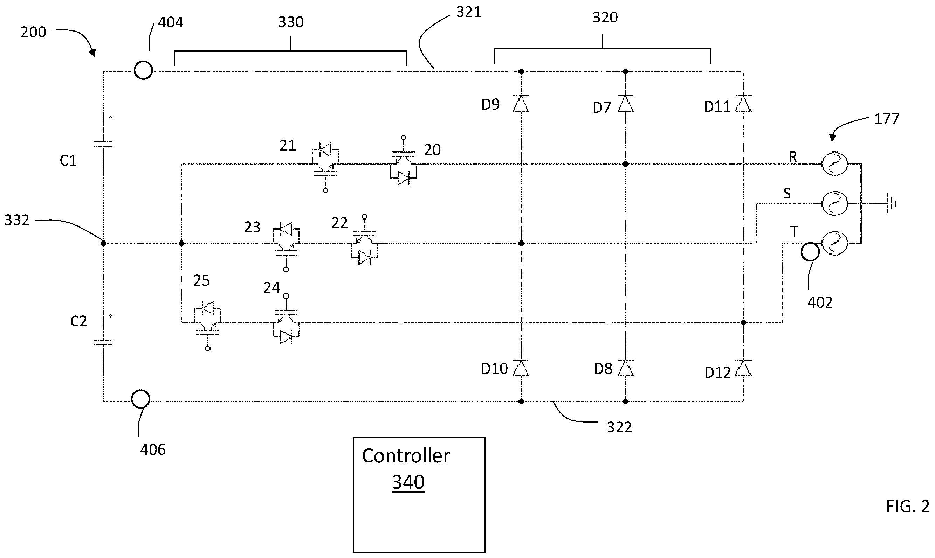

FIG. 2 is a schematic diagram of a converter 200, along with the multiphase, AC input voltage 177 in an example embodiment. The converter 200 may be a Vienna rectifier. The converter 200 includes a rectifier section 320 having a plurality of rectifier legs. The number of rectifier legs equals the number of phases of the AC input voltage 177, shown as phases R, S and T, at the input to the rectifier section 320. Each rectifier leg includes a pair of diodes. As shown in FIG. 2, the cathode of diode D7 is connected to a positive DC bus 321, the anode of diode D7 is connected to phase R of the multiphase, AC input voltage 177, the cathode of diode D8 is connected to phase R of the multiphase, AC input voltage 177 and the anode of diode D8 is connected to a negative DC bus 322. Diodes D9-D12 are arranged in a similar manner, with respect to phases S and T of the multiphase, AC input voltage 177.

The converter 200 includes a voltage regulator section 330 having a plurality of voltage regulator legs. The number of voltage regulator legs equals the number of phases of the multiphase, AC input voltage 177, shown as phases R, S and T at the input to the voltage regulator section 330. Each voltage regulator leg includes a pair of switches. As shown in FIG. 2, switches 20 and 21 define a first voltage regulator leg, switches 22 and 23 define a second voltage regulator rectifier leg and switches 24 and 25 define a third voltage regulator leg. Switches 20-25 can be any type of switch including, but not limited to, an insulated gate bipolar transistor (IGBT) or a metal-oxide-semiconductor field effect transistor (MOSFET). The first, second and third voltage regulator legs regulate voltage on the positive DC bus 321, the negative DC bus 322 and a neutral point 332 between the positive DC bus 321 and the negative DC bus 322. A capacitor C1 is connected between the positive DC bus 321 and the neutral point 332. A capacitor C2 is connected between the negative DC bus 322 and the neutral point 332. Capacitors C1 and C2 provide for filtering and smoothing of the DC output voltage between the positive DC bus 321 and the negative DC bus 322.

A controller 340 monitors one or more parameters of the converter 200 and controls switches 20-25 accordingly. The controller 340 may be implemented using a general-purpose microprocessor executing a computer program stored on a storage medium to perform the operations described herein. Alternatively, the controller 340 may be implemented in hardware (e.g., ASIC, FPGA) or in a combination of hardware/software. The controller 340 may also be part of an air conditioning control system. The controller 340 provides control signals to switches 20-25 of the voltage regulator section 330. The control signals may be pulse width modulation (PWM) signals, as known in the art.

The DC output voltage of the converter 200 is provided across the positive DC bus 321 and the negative DC bus 322. The DC output voltage of the converter 200 is provided to the inverter 110. The inverter 110 may be implemented using known multilevel, multiphase inverter topologies (e.g., a 3 level, multiphase, T-type inverter). The output of the inverter 110 is a multiphase, AC output voltage which is provided to the phase windings of the motor 102. The inverter 110 may be controlled by the controller 340 using known signaling (e.g., PWM control).

The controller 340 operates the converter 200 to control the DC output voltage across the positive DC bus 321 and the negative DC bus 322 as a function of a magnitude of the multiphase, AC input voltage 177. One or more sensors 402 are used to monitor a magnitude of the multiphase, AC input voltage 177. A sensor 402 may be used for each phase (e.g., R, S, and T) or a single sensor 402 may be used on a single phase. The one or more sensors 402 provide a magnitude (e.g., voltage) of the multiphase, AC input voltage 177 to the controller 340, by a wired and/or wireless connection.

A second sensor 404 is used to monitor a magnitude of the positive DC bus 321. The second sensor 404 provides a magnitude (e.g., voltage) of the positive DC bus 321 to the controller 340, by a wired and/or wireless connection. A third sensor 406 is used to monitor a magnitude of the negative DC bus 322. The second sensor 406 provides a magnitude (e.g., voltage) of the negative DC bus 322 to the controller 340, by a wired and/or wireless connection.

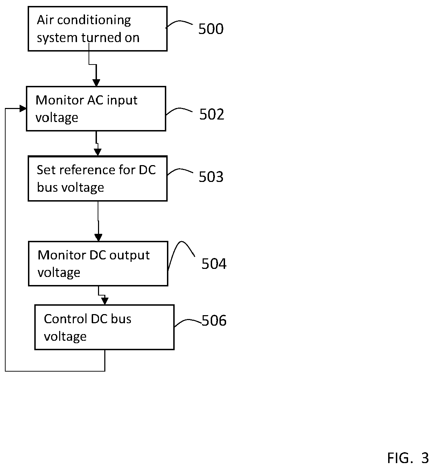

FIG. 3 is a flowchart of a process for controlling the converter 200 in an example embodiment. The process is implemented by the controller 340. At 500, the air conditioning system 100 is turned on. At 502, the controller 340 monitors the AC input voltage 177 via sensor 402. At 503, the controller sets a reference for the DC output voltage. The reference may be set as a fixed offset (e.g., 50V) above an expected AC input voltage 177. In another example, the DC output voltage offset is greater than the AC input voltage by a variable amount, such as a percentage of the AC input voltage (e.g., 5%). In another embodiment, the DC output voltage offset is greater than the AC input voltage by a variable amount that varies in response to load and/or speed on the compressor 104, as indicated by voltage at motor 102.

At 504, the controller 340 monitors the positive and negative DC bus voltages via sensors 404 and 406. Unless stated otherwise, the DC output voltage is the difference between the positive DC bus voltage and the negative DC bus voltage.

At 506, the controller 340 controls the DC output voltage match the reference for the DC output voltage. The controller 340 controls the DC output voltage by providing control signals to switches 20-25. For example, the controller 340 may provide control signals to switches 20-25 so that the DC output voltage equals the reference and is greater than the AC input voltage by the offset. While the air conditioning system 100 is operation, the method flows back to 502 for continuous control to the DC output voltage.

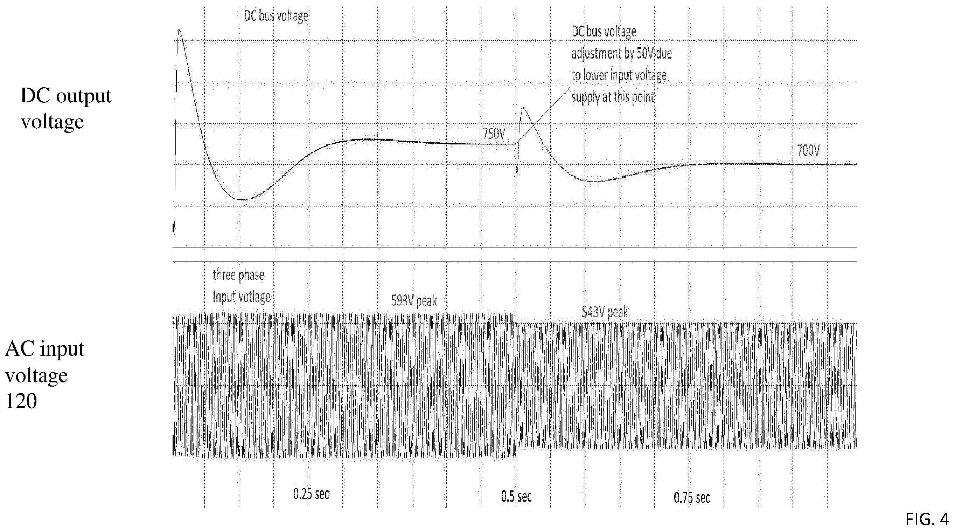

FIG. 4 depicts an AC input voltage and DC output voltage in an example embodiment. As shown in FIG. 4, the AC input voltage changes from 593 volts to 543 volts at time 0.5 seconds. In response, the controller 340 adjusts the DC output voltage from 750 volts to 700 volts.

Embodiments of this disclosure provide a new way to control the DC output voltage for a power electronics converter for better life of electronics used in the power electronics converter. The automated approach to controlling the DC output voltage reduces voltage stress on the internal components and enhances the life of the sensitive electronics.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present disclosure, but that the present invention will include all embodiments falling within the scope of the claims.

## Claims

1. A converter (200) for an air conditioning system, the converter comprising:
a rectifier section (320) configured to receive an AC input voltage;
a voltage regulator section (330) coupled to the rectifier section (320), the voltage regulator section configured to control a DC output voltage across a positive DC bus (321) and a negative DC bus (322); and
a controller (340) in communication with the rectifier section (320) and the voltage regulator section (330), the controller (340) configured to control the converter (200) such that the DC output voltage is greater than AC input voltage by an offset.

2. The converter of claim 1, wherein the offset is a fixed amount.

3. The converter of claim 1, wherein the offset is a variable amount.

4. The converter of claim 3, wherein the offset is a percentage of the AC input voltage.

5. The converter of claim 3, wherein the offset is a variable amount in response to load or speed of a compressor (104) of the air conditioning system (100).

6. The converter of any preceding claim, wherein the converter (200) is a Vienna rectifier.

7. An air conditioning system (100) comprising:
a compressor (104), condenser (106) and evaporator (108);
an inverter (110) providing a multiphase, AC output voltage to the compressor (104);
a converter (200) as claimed in claim 1 configured to generate a DC output voltage across the positive DC bus (321) and the negative DC bus (322), the DC output voltage supplied to the inverter (110).

8. A method of controlling a converter (200) in an air conditioning system (100), the method comprising:
monitoring an AC input voltage;
monitoring a DC output voltage between a positive DC bus (321) and a negative DC bus (322);
controlling the converter (200) such that the DC output voltage is greater than AC input voltage by an offset.

9. The method of claim 8, wherein the offset is a fixed amount.

10. The method of claim 8, wherein the offset is a variable amount.

11. The method of claim 10, wherein the offset is a percentage of the AC input voltage.

12. The method of claim 10, wherein the offset is a variable amount in response to load or speed of a compressor (104) of the air conditioning system (100).

13. The method of any of claims 8 to 12, wherein the converter (200) is a Vienna rectifier.
